# EUROPEAN PATENT SPECIFICATION

(11) **EP 2 656 573 B1**
(45) Date of publication and mention of the grant of the patent: **03.06.2020**
(21) Application number: 10798107.8
(22) Date of filing: 23.12.2010
(51) Int. Cl.: H04L 29/06

(54) **REMOTE PROVISIONING OF A DOWNLOADABLE IDENTITY MODULE INTO ONE OF SEVERAL TRUSTED ENVIRONMENTS**
ENTFERNTE BEREITSTELLUNG EINES HERUNTERLADBAREN IDENTITÄTSMODULS IN EINE VON MEHREREN SICHEREN UMGEBUNGEN
FOURNITURE À DISTANCE D'UN MODULE D'IDENTITÉ TÉLÉCHARGEABLE DANS UN ENVIRONNEMENT DE CONFIANCE PARMI PLUSIEURS ENVIRONNEMENTS DE CONFIANCE

(43) Date of publication of application: 30.10.2013
(73) Proprietor: Telefonaktiebolaget LM Ericsson (publ), 164 83 Stockholm (SE)
(72) Inventor: HJELM, Johan, Tokyo 165-0025 (JP); SUGIMOTO, Shinta, Kawasaki-shi, Kanagawa 211-0012 (JP)
(74) Representative: Brann AB
(86) International application number: PCT/EP2010/070691
(87) International publication number: WO 2012/084060

(56) References cited:
- WO-A2-2009/092115
- US-A1- 2010 311 468
- "3rd Generation Partnership Project; Technical Specification Group Services and System Aspects; Feasibility study on the security aspects of remote provisioning and change of subscription for Machine to Machine (M2M) equipment (Release 9)", 3GPP STANDARD; 3GPP TR 33.812, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, no. V9.2.0, 22 June 2010 (2010-06-22), pages 1-87, XP050441986, [retrieved on 2010-06-22] cited in the application

## Description

### Field of the Invention

This invention relates to methods and apparatus for implementing remote provisioning of a downloadable identity module to mobile telecommunications devices. More particularly, the invention relates to a method and apparatus for selecting a trusted environment from a plurality of trusted environments available at a mobile device into which a downloadable identity module should be provided.

### Background to the Invention

An entity that has subscribed for the provision of services to a mobile device such as a mobile telephone is required to have an associated identity module, often referred to as a Subscriber Identity Module (SIM), which identifies the subscriber and the services to which the subscriber is entitled. The term identity module includes a collection of security data and functions that allow a device to access a communication network. The type of identity module required depends on the particular mobile device and the network over which it is to be used, for example a mobile device operating over the IP Multimedia Subsystem (IMS) requires an IP Multimedia Services Identity Module (ISIM), whereas a mobile device operating over the Universal Mobile Telecommunications System (UMTS) requires a Universal Subscriber Identity Module (USIM)

When a mobile device is purchased it is necessary to provide the device with an identity module before the device can be used. The process is referred to as "provisioning" the device. Typically, the provisioning process is carried out manually, for example by sales personnel when the mobile device is purchased, or with a partial degree of automation, e.g. via a Point of Sale (PoS). The current 3^{rd} Generation Partnership Project (3GPP) system defines the use of a USIM/ISIM application stored in a Universal Integrated Circuit Card (UICC) as a means of securely storing, among other data, the data required to access a network. In a world of billions of devices, the currently established manual or semi-automated procedures for handling credentials in UICC are non-efficient, non-scalable and non-user friendly. Furthermore, the shortcomings of these procedures are particularly apparent when considering provisioning for machine-to-machine (M2M) and connected consumer electronics (CCE) devices.

3GPP TR 22.838 and TR 33.812 propose the use of a remote provisioning and change of subscription procedure for M2M Equipment (M2ME) that does not require human intervention at the location of the M2ME. These remote provisioning procedures make use of a downloadable Machine Communication Identity Module (MCIM). The term MCIM refers to the M2M specific identity module. A typical downloadable MCIM includes credentials, executables (including algorithms and a system of files and access control mechanisms) and data (e.g. file contents, security policy, etc), and is stored in a Trusted Environment (TRE) provided in the M2ME. The TRE provides some hardware and software protection for the provisioning, storage, execution and management of the MCIM applications. The TRE might be a completely separate module (e.g. UICC or TPM) or it might share memory and CPU etc, with the device. Since it might be possible to move the TRE between devices (as in the UICC case) a subscription is bound to the TRE identity rather than the device identity. Furthermore, since the device is not fully trusted, decryption of the credentials must be performed inside the TRE, and not in the hosting device.

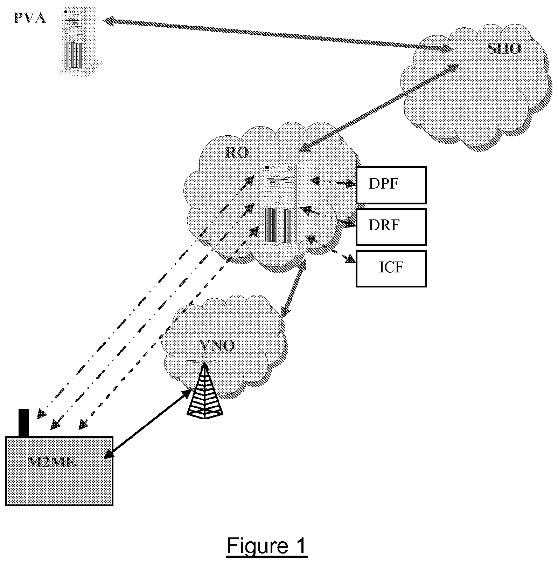

Figure 1 illustrates schematically the network architecture used for implementing these remote provisioning procedures. This network architecture includes a number of entities providing services to the M2ME, and with which the M2ME can communicate. These entities include the Visited Network Operator (VNO), the Registration Operator (RO), the Selected Home Operator (SHO) and the Platform Validation Authority (PVA).

In order to perform network authentication and MCIM provisioning, the M2ME must obtain provisional IP connectivity. To do so, the M2ME makes use of the basic network access (i.e. air interface) provided by the VNO. The IP connectivity is then provided by the Initial Connectivity Function (ICF) of the RO. The RO also provides a Discovery and Registration Function (DRF), which helps the M2ME discover and register itself with the SHO, which is the M2ME's intended home network operator. In order for the M2ME to be able to connect to the RO and obtain information about the SHO, it needs to be pre-provisioned with a PCID (Provisional Connectivity ID), which is a temporary private identity that identifies each M2ME. The PCID, where required, should be installed in the M2ME by the supplier in order to allow the M2ME to register in a 3GPP network without yet being associated with any specific SHO. The PCID follows the same format as the IMSI.

After the M2ME discovers and registers itself with the SHO, it then needs to download the MCIM application to the TRE. However, before the SHO allows this download procedure, it first must request that the PVA authenticate and validate the integrity of the TRE. Once this integrity check is successfully completed, the SHO authorises a Download and Provisioning Function (DPF) of the RO to provision the MCIM application into the M2ME's TRE. The MCIM may be generated by the SHO and provided to the DPF, or alternatively, the MCIM may simply authorise the DPF to provide the M2ME with an MCIM on its behalf. 3GPP TR 33.812 also describes several variations of these procedures, which serve to enhance security, operability, and other factors. These include methods which leverage the presence of a UICC, as well as those which assume that a UICC is not present.

Document US 2010/311468 A1 describes a method of provisioning data supporting a plurality of service providers in a virtual Subscriber Identity Module (VSIM) internal memory unit of a mobile device.

### Summary

Whilst the remote provisioning procedures have been defined in relation to M2ME, they could equally be implemented in order to provide a downloadable identity module to any type of mobile device, mobile terminal or user equipment. Furthermore, 3GPP TR 33.812 states that an M2ME should support at least one TRE, leaving open the possibility that an M2ME could have more than one TRE. However, only one TRE can be selected to provide the identity and associated credentials for performing authentication and key agreement (AKA) to connect to a network. As such, it has been recognised here that, if a mobile device were provided with more than one TRE, there would be a need to ensure that the appropriate TRE is used when attempting provisioning of a downloadable identity module.

It is therefore an aim of the present invention to provide a method according to claim 1, an apparatus according to claim 8, a system according to claim 12 and a computer program according to claim 14 for selecting a trusted environment from a plurality of trusted environments available at a mobile device into which a downloadable identity module application should be provided.

This enables selection of a Trusted Environment from a plurality of Trusted Environments available at a mobile device into which a downloadable identity module application should be provisioned. The above aspects also provide that, if there are several home operators available that can provide a downloadable identity module into at least one of Trusted Environments available at a mobile device, then one of these home operators can be selected. This in turn provides that a Registration Operator can act as broker to select the most favourable home operator. In doing so, the above aspects allow for increased flexibility in the hardware configuration of mobile devices.

### Brief Description of the Drawings

Some embodiments of the present invention will now be described in detail with reference to the accompanying drawings, in which:
Figure 1 illustrates schematically a network architecture used for implementing remote provisioning;
Figure 2 is an example signalling flow diagram of the remote provisioning of a downloadable identity module to a mobile device having a plurality of Trusted Environments;
Figure 3A is an example flow diagram illustrating the steps performed by a mobile device having a plurality of Trusted Environments to implement remote provisioning of a downloadable identity module;
Figure 3B is an example flow diagram illustrating the steps performed by a Registration Operator to implement remote provisioning of a downloadable identity module to a mobile device having a plurality of Trusted Environments;
Figure 3C is an example flow diagram illustrating the steps performed by a Home Operator in order to support remote provisioning of a downloadable identity module to a mobile device having a plurality of Trusted Environments; and
Figure 4 illustrates schematically an embodiment of a remote provisioning system for implementing remote provisioning of a downloadable identity module to a mobile device having a plurality of Trusted Environments.

### Detailed Description

By way of example, consider a mobile device which has a built-in TRE and a UICC tray into which a UICC customized for identity module remote provisioning is inserted. The UICC holds a Javacard applet which is capable of provisioning an identity module into the secure environment inside the UICC with the assistance of backend enablers inside the network. In this regard, the UICC/Javacard can be considered to be a TRE that can be provisioned with one or more downloadable identity module applications. The mobile device therefore has two TREs on which identity modules from different operators can be provisioned. However, a SHO may require that a downloadable identity module is only provisioned into the built-in TRE. For example, this could be because the device, and therefore the built-in TRE, is provided by that SHO. Alternatively, this could be because both the SHO and the TRE trust the same Certificate Authority (CA) as a root of trust, whilst the TRE provided by UICC does not. As such, a downloadable identity module provided by the SHO requires the TRE into which the SHO is provisioned to have certain features and/or capabilities. The built-in TRE should therefore be used to provision the mobile device with a downloadable identity module for authentication with the SHO, and any attempt to remotely provision the identity module provided by the SHO into TRE provided by the UICC would fail. However, the standards do not currently define any mechanism for selecting or switching between several TREs.

There will now be described a method of implementing selection of a TRE from a plurality of TREs available in a mobile device. According to this method, a mobile device with more than one TRE would request selection of one of the TREs into which a downloadable identity module should be provisioned and which of the available home operators can provide the downloadable identity module for the selected TRE, with the downloadable identity module then being provisioned into the selected TRE at the mobile device, from the selected home operator.

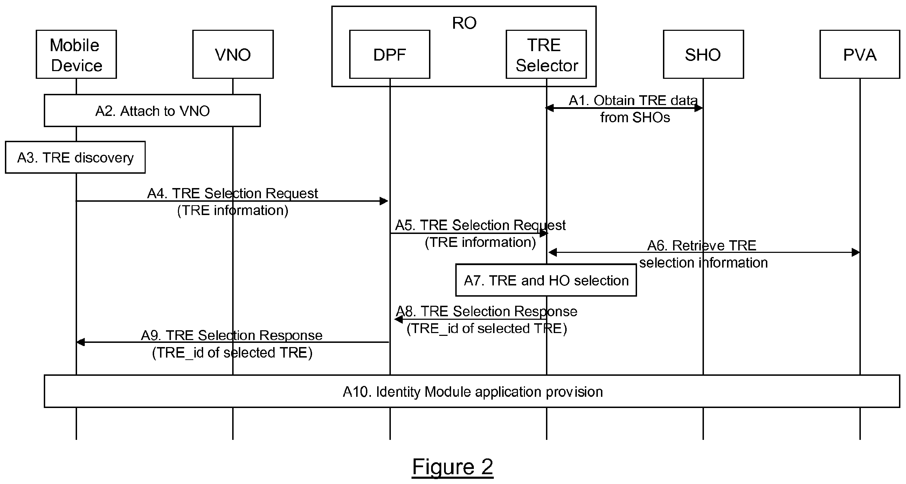

Figure 2 is an example signalling flow diagram of the remote provisioning of a downloadable identity module to a mobile device having a plurality of TREs, including the selection of one of the plurality of TREs. The steps performed are as follows:
A1. A RO maintains information regarding the Trusted Environments for which the available home operators are capable of providing downloadable identity modules. For example, a TRE selection function could identify all of the available home operators and establish a relationship with each home operator. The DRF could then obtain the information regarding the Trusted Environments for which each home operator is capable of providing downloadable identity modules during the process of establishing this relationship. Of course, this information may be obtaining by other functional entities provided at the RO, such as the DRF.
A2. The mobile device attaches to the VNO according to the standard procedures described in 3GPP TR 33.812. For example, this could include the mobile device sending an attach message to the VNO including a PCID, the VNO contacting the RO, and the RO sending a Bootstrap message to the mobile device including the IP connectivity parameters and the address of the DPF.
A3. The mobile device then performs a TRE discovery procedure to detect the TREs available at the mobile device. As a result, the mobile device generates a set of information regarding all of the TREs available at the mobile device, including an identifier (TRE_id) for each TRE.
A4. The mobile device then sends a TRE selection request message, including the TRE information, to the DPF provided by the RO.
A5. The DPF forwards the TRE selection request message to the TRE selection function also provided by the RO.
A6. Depending upon the TRE information providing by the mobile device, or the information provided by the home operators, then the RO may be required to contact one or more PVAs in order to obtain information on the capabilities and/or features of one or TREs. However, this step is optional.
A7. Using the TRE information, and the information obtained from the home operators, the TRE selection function selects one of the TREs that is to be used for the remote provisioning of a downloadable identity module. As part of this selection process, the RO may also select a home operator that is to provide the downloadable identity module application, if more than one home operator is available. For example, each home operator may be capable of providing a downloadable identity module for certain types of TRE, but not others, such that only a particular combination of TRE and home operator will be able to successfully implement remote provisioning.
A8. The TRE selection function sends a TRE selection response message to the DPF that includes the TRE_id of the selected TRE.
A9. The DPF forwards the TRE selection response message to the mobile device.
A10. The mobile device then proceeds with the standard remote provisioning procedure as described in 3GPP TR 33.812. For example, the mobile device contacts the DPF at the RO and includes relevant information of the mobile device and the selected TRE (e.g. the platform validation information). The RO then connects to the SHO and relays the relevant information. The SHO then requests that the PVA validate the authenticity and integrity of the TRE before delivering the encrypted identity module application to the RO for downloading to the mobile device.

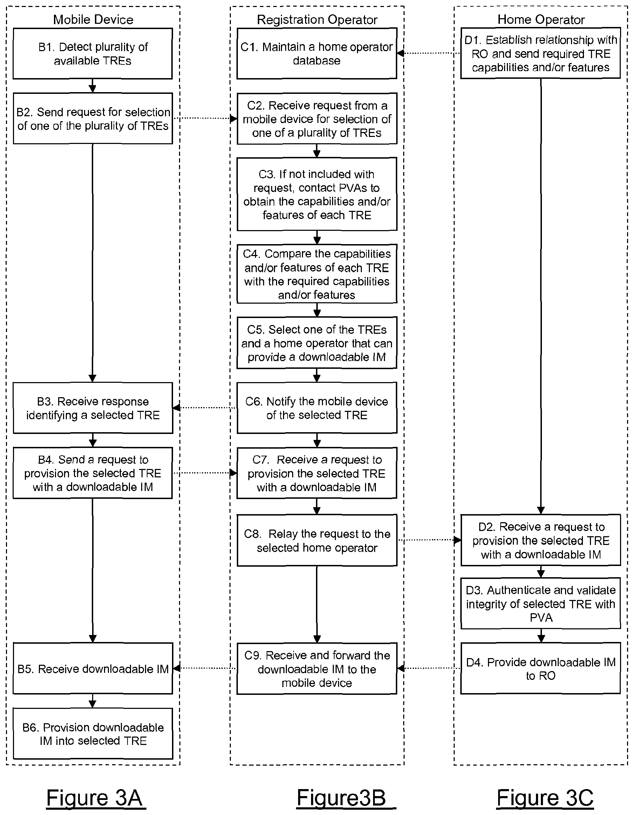

Figure 3A is an example flow diagram illustrating the steps (B1 to B6) performed by the mobile device. Figure 3B is an example flow diagram illustrating the steps (C1 to C9) performed by the Registration Operator, and Figure 3C is an example flow diagram illustrating the steps (D1 to D4) performed by the Home Operator.

In order to perform the selection of one of the TREs, the TRE selection function needs to know which home operators are available to the RO, and also needs to know information regarding the TREs for which each of the available home operators can provide a downloadable identity module. The RO should therefore maintain a home operator database that stores information regarding the TREs for which each of the available home operators can provide a downloadable identity module. In order to maintain the information stored in the home operator database, the home operators could be configured to provide information regarding the TREs for which they can provide a downloadable identity module each time they establish or re-establish a relationship with the RO.

The information regarding the TREs for which each of the available home operators can provide a downloadable identity module could include an identifier for each TRE or each type of TRE that they support. Alternatively, this information could include details of the capabilities and/or features that the home operator requires a TRE to have in order to be able to provide a downloadable identity module for that TRE. For example, these capabilities and/or features may include details of the manufacturer of the TRE, the hardware that provides the TRE, the incoming and outgoing logical and physical interfaces of the TRE, the encryption mechanisms used by the TRE, security mechanisms used by the TRE, etc.

Similarly, the information regarding the TREs available at the mobile device can also include details of the capabilities and/or features of each of the TREs. This capability and/or feature information can then be compared with the required capability and/or feature information stored in the home operator database to determine which of the TREs available at the mobile device can be provided with a downloadable identity module by at least one of the home operators.

Alternatively, if the information regarding the TREs available at the mobile device only includes an identifier for the TRE, then the RO should maintain a resolution database that stores TRE identities, each TRE identity being associated with an identity of a server that can provide capability and/or feature information for that TRE. The TRE selection function could then use this database to resolve the identities of each of the TREs available at the mobile device to the identity of a server that can provide capability and/or feature information for the TRE. For example, the resolution database could identify a PVA that is responsible for authenticating and validating each identified TRE. The TRE selection function could then contact each of the identified servers to obtain the capability and/or feature information of each TRE in order to compare this information with the required capability and/or feature information stored in the home operator database.

If the TRE selection function determines that there is more than one home operator available that can provide a downloadable identity module to the mobile device, then the TRE selection function will be required to perform selection of one of these home operators. To do so, the TRE selection function may make use of a set of rules that determine which of the TRE's available at the mobile device should be selected and which of the home operators that can provide a downloadable identity module should be selected to provide the downloadable identity module. If the TRE selection function performs selection of a home operator when selecting a TRE, then the TRE selection function should store details of this selection in order to ensure that any request to provision a downloadable identity module into the selected TRE are fulfilled using the selected home operator.

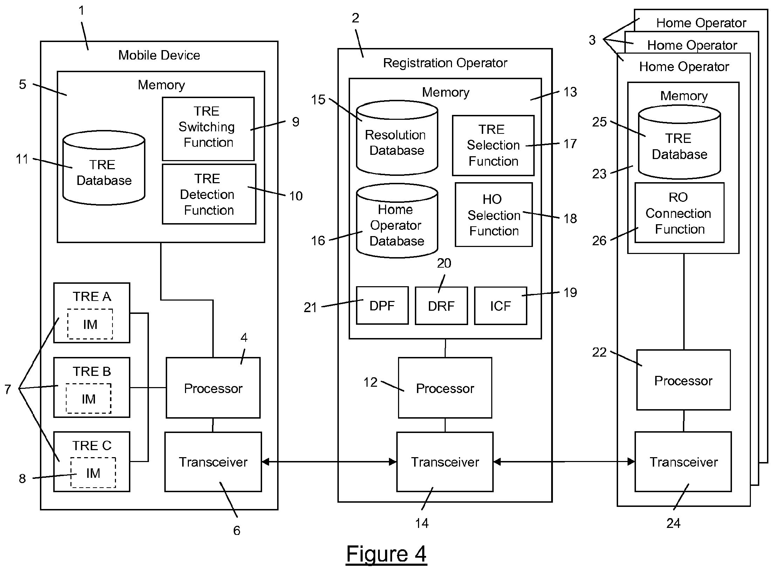

Figure 4 illustrates schematically an embodiment of a remote provisioning system for implementing the selection of a TRE, and for implementing the use of the selected TRE. The remote provisioning system comprises a mobile device 1, a Registration Operator 2, and a number of Home Operators 3, each of which can be implemented as a combination of computer hardware and software.

The mobile device 1 comprises a processor 4, a memory 5, a transceiver 6 and a plurality of TREs 7, TRE A, TRE B and TRE C, each capable of storing at least one identity module 8. The memory 5 stores the various programs/executable files that are implemented by the processor 4, and also provides a storage unit for any required data. The programs/executable files stored in the memory, and implemented by the processor, include a TRE Switching Function 9 and a TRE Detection Function 10. The TRE Switching Function 9 switches between all of the TREs available to the mobile device as required, enabling the mobile device to make use of any active downloaded identity module regardless of which TRE it has been installed into. The TRE Detection Function 10 identifies all of the TREs available at the mobile device, including detecting if and when a TRE has been added to or removed from the mobile device 1. The TRE Detection Function 10 also determines relevant information for each TRE, and maintains a TRE Database 11 stored in the memory 5. For example, this relevant information can include an identifier for each TRE 7 available at the mobile device 1, and capability and/or feature information for each TRE 7. The TRE Database 1 can then be used to provide the TRE information for sending to the Registration Operator 2. Further, the TRE Detection Function 10 can report to the RO 2 whenever there is a change in the TRE Database 11.

The Registration Operator 2 comprises a processor 12, a memory 13, and a transceiver 14. The memory 13 stores the various programs/executable files that are implemented by the processor 12, and also provides a storage unit for any required data, including a Resolution Database 15 and a Home Operator Database 16. The programs/executable files stored in the memory 13, and implemented by the processor 12, include a TRE Selection Function 17 and a Home Operator Selection Function 18.

The Resolution Database 15 stores TRE identities, each TRE identity being associated with an identity of a server that can provide capability and/or feature information for that TRE, so that the TRE Selection Function 17 can use this database to resolve the identities of each of the TREs available at the mobile device to the identity of a server that can provide capability and/or feature information for the TRE. The Home Operator Database 16 stores information regarding the TREs for which each of the available Home Operators 3 can provide a downloadable identity module. The TRE Selection Function 17 uses the TRE information provided by the mobile device 1 together with the information in the Home Operator Database 16 to select one of the TREs available at the mobile device that is to be used for the remote provisioning of a downloadable identity module. Home Operator Selection Function 18 selects a Home Operator 3 that is to provide a downloadable identity module, if there is more than one home operator available that can provide a downloadable identity module to the mobile device. The Registration Operator 2 will further comprise an Initial Connectivity Function (ICF) 19, a Discovery and Registration Function (DRF) 20 and a Download and Provisioning Function (DPF) 21, as defined in 3GPP TR 33.812.

The Home Operators 3 comprise a processor 22, a memory 23, and a transceiver 24. The memory 23 stores the various programs/executable files that are implemented by the processor 22, and also provides a storage unit for any required data, including a TRE Database 25. The programs/executable files stored in the memory 23, and implemented by the processor 22, include a RO Connection Function 26. The TRE Database 25 stores information regarding the Trusted Environments for which the server can provide a downloadable identity module. For example, this information could include an identifier for each TRE or each type of TRE that is supported by the Home Operator 3. Alternatively, this information could include details of the capabilities and/or features that the Home Operator 3 requires a TRE to have in order to be able to provide a downloadable identity module for that TRE. The RO Connection Function 26 enables the Home Operator 3 to establish a relationship between the Home Operator 3 and Registration Operator 2.

The methods described above assume that each TRE can be addressed individually by means of a TRE identity that is used by the PVA Discovery Function and the Resolution Database in the RO, and the TRE Switching Function in the mobile device. For example, the TRE identity could include an identity of the manufacturer of the TRE and an additional identity that uniquely identifies the TRE to the manufacturer. Such an identifier would enable an appropriate PVA to be identified from the identity of the manufacturer.

The methods and apparatuses described above enable selection of a TRE from a plurality of TREs available at a mobile device into which a downloadable identity module application should be provisioned. They also provide that the SHO can be selected, provided that the SHO supports an available TRE, which in turn provides that the RO can act as broker to select the most favourable SHO. In addition, the methods and apparatuses described above also provide support for mobile devices that have a plurality of available TREs, including removable TREs (for example, UICC) thereby allowing for increased flexibility in the hardware configuration of mobile devices.

In addition, the methods and apparatuses described above provide that access and service authorization can be separated/decoupled in roaming scenarios. For example, this would allow a user who purchases a mobile device in a T-Mobile® store in Aachen (Germany) and who then takes the mobile device home to Wolfhaag (the Netherlands), to make use of a network provided by Proximus®, a network operator in Gemmenich (Belgium), if that network provides the strongest signal. In this case, the user would be able to use a T-Mobile® SIM for service authorization and a Proximus® SIM for connectivity.

Although the invention has been described in terms of preferred embodiments as set forth above, it should be understood that these embodiments are illustrative only. Those skilled in the art will be able to make modifications and alternatives in view of the disclosure which still fall within the scope of the appended claims.

For example, whilst the methods and apparatuses described above have referenced only two or three TREs, and only two or three SHOs and PVAs, the skilled person will recognise that these methods and apparatuses could equally be applied to any number of downloadable identity modules, TREs, SHOs or PVAs. Furthermore, given that a TRE can hold multiple downloadable identity modules, the methods and apparatuses outlined above could be used for a number of downloadable identity modules and TREs simultaneously.

## Claims

1. A method to implement provisioning of a downloadable identity module into one of a plurality of Trusted Environments (7) available at a mobile device (1), the method comprising the following steps:
for each of one or more home operators (3) capable of providing downloadable identity modules, maintaining, by a server (2), information regarding Trusted Environments (7) for which the one or more home operators (3) provide the downloadable identity modules;
obtaining, by the server (2), information regarding the plurality of Trusted Environments (7) available at the mobile device (1);
comparing, by the server (2), information regarding each of the plurality of Trusted Environments (7) available at the mobile device (1) with information regarding the Trusted Environments (7) required by each of the one or more home operators (3) in order to provide the downloadable identity modules;
based upon the comparison, selecting, by the server (2), one of the plurality of Trusted Environments (7) available at the mobile device (1), for which at least one of the one or more home operators (3) provides the downloadable identity modules;
selecting, by the server (2), one of the one or more home operators (3) which provides the downloadable identity modules for the selected Trusted Environment; and
managing, by the server (2), the provisioning of the downloadable identity module to the mobile device (1).

2. The method as claimed in claim 1, wherein the step of obtaining the information regarding the plurality of Trusted Environments (7) available at the mobile device (1) comprises:
receiving, by the server (2), a request from the mobile device (1) for the selection of the one of the plurality of Trusted Environments (7) available at the mobile device (1), the request including the information regarding the plurality of Trusted Environments (7) available at the mobile device (1).

3. The method as claimed in any of claims 1 or 2, wherein the information regarding the plurality of Trusted Environments (7) available at the mobile device (1) comprises capabilities and/or features for each of the plurality of Trusted Environments (7) available at the mobile device (1), or wherein the information regarding the plurality of Trusted Environments (7) available at the mobile device (1) comprises an identifier for each of the plurality of Trusted Environments (7) available at the mobile device (1).

4. The method as claimed in claim 3, wherein if the information regarding the plurality of Trusted Environments (7) available at the mobile device (1) comprises the identifier, the step of obtaining the information regarding the plurality of Trusted Environments (7) available at the mobile device (1) comprises:
for each of the plurality of Trusted Environments (7) available at the mobile device (1), using the identifier of the Trusted Environment to identify a further server that provides capabilities and/or features of the Trusted Environment, and obtaining the capabilities and/or the features from the identified further server, and optionally wherein the identified further server is a Platform Validation Authority server.

5. The method as claimed in any of claims 3 or 4, wherein the information regarding the Trusted Environments (7) for which the one or more home operators (3) provide the downloadable identity modules comprises:
capabilities and/or features which are required by the one or more home operators (3) in order to provide the downloadable identity modules.

6. The method as claimed in claim 1, further comprising the steps of:
sending, by the mobile device (1), a request to the server (2) for selection of the one of the plurality of Trusted Environments (7) into which the downloadable identity module is to be provisioned, the request including information regarding each of the plurality of Trusted Environments (7) available at the mobile device (1);
receiving, by the mobile device (1), a response from the server (2) identifying the selected one of the plurality of Trusted Environments (7);
sending, by the mobile device (1), a request to the server (2) to provision the identified Trusted Environment into the downloadable identity module;
receiving, by the mobile device (1), the downloadable identity module from the server (2); and
provisioning, by the mobile device (1), the downloadable identity module into the identified Trusted Environment.

7. The method as claimed in claim 6, wherein the information regarding the plurality of Trusted Environments (7) available at the mobile device (1) comprises capabilities and/or features for each of the plurality of Trusted Environments (7) available at the mobile device (1), and optionally wherein the information regarding the plurality of Trusted Environments (7) available at the mobile device (1) comprises an identifier for each of the plurality of Trusted Environments (7) available at the mobile device (1), and/or the method further comprising the steps of:
after receiving the response from the server (2), sending, by the mobile device (1), a request to the server (2) for provisioning of the downloadable identity module into the identified Trusted Environment.

8. A server (2) configured to implement provisioning of a downloadable identity module into one of a plurality of Trusted Environments (7) available at a mobile device (1), the server (2) comprising:
a transceiver (14) arranged to obtain, from one or more home operators (3) capable of providing downloadable identity modules, information regarding Trusted Environments (7) for which the one or more home operators (3) provide the downloadable identity modules, and further arranged to obtain information regarding the plurality of Trusted Environments (7) available at the mobile device (1);
a Trusted Environment selection function (17) arranged to select one of the plurality of Trusted Environments (7) available at the mobile device (1), for which at least one of the one or more home operators (3) provides the downloadable identity modules, wherein the Trusted Environment selection function (17) is further arranged to select the one of the plurality of Trusted Environments (7) available at the mobile device (1) on a basis of a comparison of information regarding each of the plurality of Trusted Environments (7) available at the mobile device (1) with information regarding the Trusted Environments (7) required by each of the one or more home operators (3) in order to provide the downloadable identity modules;
a home operator selection function (18) arranged to select one of the one or more home operators (3), which provides the downloadable identity modules for the selected Trusted Environment; and
a downloading and provisioning function (21) arranged to manage the provisioning of the downloadable identity module to the mobile device (1).

9. The server (2) as claimed in claim 8, wherein the transceiver (14) is further arranged to receive a request from the mobile device (1) for selection of the one of the plurality of Trusted Environments (7) available at the mobile device (1), the request including the information regarding the plurality of Trusted Environments (7) available at the mobile device (1), and/or wherein the transceiver (14) is further arranged to receive the information regarding the plurality of Trusted Environments (7) available at the mobile device (1), the information comprising capabilities and/or features for each of the plurality of Trusted Environments (7) available at the mobile device (1).

10. The server (2) as claimed in any of claims 8 or 9, wherein the transceiver (14) is further arranged to receive the information regarding the plurality of Trusted Environments (7) available at the mobile device (1), the information comprising an identifier for each of the plurality of Trusted Environments (7) available at the mobile device (1) and optionally further comprising:
a resolution database (15) arranged to use each of the Trusted Environment identifiers to identify a further server that provides capabilities and/or features of the Trusted Environment, and optionally wherein the Trusted Environment selection function (17) is further arranged to obtain, from the identified further server, the capabilities and/or the features of the Trusted Environment, or wherein the Trusted Environment selection function (17) is further arranged to obtain information, from each of the one or more home operators (3), the information comprising an identifier for each of the Trusted Environments (7) for which the one or more home operators (3) provide the downloadable identity modules.

11. The server (2) as claimed in claim 9 or 10, wherein the Trusted Environment selection function (17) is further arranged to obtain information, from each of the one or more home operators (3), the information comprising capabilities and/or features which are required by a home operator in order to provide the downloadable identity module.

12. A remote provisioning system comprising:
the server (2) according to claim 8; and
a mobile device (1) comprising:
a transceiver arranged to:
send a request to the server (2) for selection of the one of the plurality of Trusted Environments (7) available at the mobile device (1), the request including information regarding each of the plurality of Trusted Environments (7) available at the mobile device (1),
receive a response from the server (2) identifying the selected one of the plurality of Trusted Environments (7),
send a request to the server (2) to provision the identified Trusted Environment into the downloadable identity module, and
receive the downloadable identity module from the server (2); and
a switching function (9) arranged to provision the downloadable identity module into the identified Trusted Environment.

13. The remote provisioning system as claimed in claim 12, wherein the mobile device (1) further comprises:
a detection function (10) arranged to detect the plurality of Trusted Environments (7) available at the mobile device (1) and to generate information regarding each of the available Trusted Environments (7), and optionally wherein the detection function (10) is further arranged to generate information comprising capabilities and/or features of each of the plurality of Trusted Environments (7) available at the mobile device (1), and optionally wherein the detection function (10) is further arranged to generate information comprising an identifier for each of the plurality of Trusted Environments (7) available at the mobile device (1).

14. A computer readable medium provided with a computer program comprising computer program code means adapted to perform all the steps of any of claims 1 to 7 when said computer program is run on a computer.

## Patentansprüche

1. Verfahren zum Implementieren von einem Bereitstellen eines herunterladbaren Identitätsmoduls in eine von einer Vielzahl von sicheren Umgebungen (7), die auf einer mobilen Vorrichtung (1) verfügbar sind, wobei das Verfahren folgende Schritte umfasst:
für jeden von einem oder mehreren Heimbetreibern (3), die dazu in der Lage sind, herunterladbare Identitätsmodule bereitzustellen, Halten, durch einen Server (2), von Informationen, die sichere Umgebungen (7) betreffen, für die der eine oder die mehreren Heimbetreiber (3) die herunterladbaren Identitätsmodule bereitstellen;
Erhalten, durch den Server (2), von Informationen, die die Vielzahl von sicheren Umgebungen (7) betreffen, die auf der mobilen Vorrichtung (1) verfügbar sind;
Vergleichen, durch den Server (2), von Informationen, die jede von der Vielzahl von sicheren Umgebungen (7) betreffen, die auf der mobilen Vorrichtung (1) verfügbar sind, mit Informationen, die die sicheren Umgebungen (7) betreffen, die von jedem von dem einen oder den mehreren Heimbetreibern (3) benötigt werden, um die herunterladbaren Identitätsmodule bereitzustellen;
basierend auf dem Vergleich, Auswählen, durch den Server (2), von einer aus der Vielzahl von sicheren Umgebungen (7), die auf der mobilen Vorrichtung (1) verfügbar sind, für die mindestens einer von dem einen oder den mehreren Heimbetreibern (3) die herunterladbaren Identitätsmodule bereitstellt;
Auswählen, durch den Server (2), von einem von dem einen oder den mehreren Heimbetreibern (3), der die herunterladbaren Identitätsmodule für die ausgewählte sichere Umgebung bereitstellt; und
Verwalten, durch den Server (2), des Bereitstellens des herunterladbaren Identitätsmoduls für die mobile Vorrichtung (1).

2. Verfahren nach Anspruch 1, wobei der Schritt des Erhaltens der Informationen, die die Vielzahl von sicheren Umgebungen (7) betreffen, die auf der mobilen Vorrichtung (1) verfügbar sind, Folgendes umfasst:
Empfangen, durch den Server (2), einer Anfrage von der mobilen Vorrichtung (1) für die Auswahl von der einen aus der Vielzahl von sicheren Umgebungen (7), die auf der mobilen Vorrichtung (1) verfügbar sind, wobei die Anfrage die Informationen beinhaltet, die die Vielzahl von sicheren Umgebungen (7) betreffen, die auf der mobilen Vorrichtung (1) verfügbar sind.

3. Verfahren nach Anspruch 1 oder 2, wobei die Informationen, die die Vielzahl von sicheren Umgebungen (7) betreffen, die auf der mobilen Vorrichtung (1) verfügbar sind, Kapazitäten und/oder Merkmale für jede von der Vielzahl von sicheren Umgebungen (7) umfassen, die auf der mobilen Vorrichtung (1) verfügbar sind, oder wobei die Informationen, die die Vielzahl von sicheren Umgebungen (7) betreffen, die auf der mobilen Vorrichtung (1) verfügbar sind, eine Kennung für jede von der Vielzahl von sicheren Umgebungen (7) umfassen, die auf der mobilen Vorrichtung (1) verfügbar sind.

4. Verfahren nach Anspruch 3, wobei, wenn die Informationen, die die Vielzahl von sicheren Umgebungen (7) betreffen, die auf der mobilen Vorrichtung (1) verfügbar sind, die Kennung umfassen, der Schritt des Erhaltens der Informationen, die die Vielzahl von sicheren Umgebungen (7) betreffen, die auf der mobilen Vorrichtung (1) verfügbar sind, Folgendes umfasst:
für jede von der Vielzahl von sicheren Umgebungen (7), die auf der mobilen Vorrichtung (1) verfügbar sind, Verwenden der Kennung der sicheren Umgebung, um einen weiteren Server zu identifizieren, der Kapazitäten und/oder Merkmale der sicheren Umgebung bereitstellt und Erhalten der Kapazitäten und/oder der Merkmale von dem weiteren Server und wobei wahlweise der identifizierte weitere Server ein Plattformvalidierungsautorisierungsserver ist.

5. Verfahren nach einem der Ansprüche 3 oder 4, wobei die Informationen, die die sicheren Umgebungen (7) betreffen, für die der eine oder die mehreren Heimbetreiber (3) die herunterladbaren Identitätsmodule bereitstellen, Folgendes umfassen:
Kapazitäten und/oder Merkmale, die von dem einen oder den mehreren Heimbetreibern (3) benötigt werden, um die herunterladbaren Identitätsmodule bereitzustellen.

6. Verfahren nach Anspruch 1, ferner die folgenden Schritte umfassend:
Senden, durch die mobile Vorrichtung (1), einer Anfrage an den Server (2), für eine Auswahl von der einen von der Vielzahl von sicheren Umgebungen (7), in der das herunterladbare Identitätsmodul bereitgestellt werden soll, wobei die Anfrage Informationen beinhaltet, die jede aus der Vielzahl von sicheren Umgebungen (7) betreffen, die auf der mobilen Vorrichtung (1) verfügbar sind;
Empfangen, durch die mobile Vorrichtung (1), einer Antwort von dem Server (2), der die ausgewählte sichere Umgebung von der Vielzahl von sicheren Umgebungen (7) identifiziert;
Senden, durch die mobile Vorrichtung (1), einer Anfrage an den Server (2), um die identifizierte sichere Umgebung in dem herunterladbaren Identitätsmodul bereitzustellen;
Empfangen, durch die mobile Vorrichtung (1), des herunterladbaren Identitätsmoduls von dem Server (2); und
Bereitstellen, durch die mobile Vorrichtung (1), des herunterladbaren Identitätsmoduls in der identifizierten sicheren Umgebung.

7. Verfahren nach Anspruch 6, wobei die Informationen, die die Vielzahl von sicheren Umgebungen (7) betreffen, die auf der mobilen Vorrichtung (1) verfügbar sind, Kapazitäten und/oder Merkmale für jede von der Vielzahl von sicheren Umgebungen (7) umfassen, die auf der mobilen Vorrichtung (1) verfügbar sind, und wobei wahlweise die Informationen, die die Vielzahl von sicheren Umgebungen (7) betreffen, die auf der mobilen Vorrichtung (1) verfügbar sind, eine Kennung für jede von der Vielzahl von sicheren Umgebungen (7) umfassen, die auf der mobilen Vorrichtung (1) verfügbar sind, und/oder das Verfahren ferner die folgenden Schritte umfasst:
nach Empfangen der Antwort von dem Server (2), Senden, durch die mobile Vorrichtung (1), einer Anfrage an den Server (2) zum Bereitstellen des herunterladbaren Identitätsmoduls in der identifizierten sicheren Umgebung.

8. Server (2), der dazu konfiguriert ist, ein Bereitstellen eines herunterladbaren Identitätsmoduls in eine von einer Vielzahl von sicheren Umgebungen (7), die auf einer mobilen Vorrichtung (1) verfügbar sind, zu implementieren, wobei der Server (2) Folgendes umfasst:
einen Transceiver (14), der so angeordnet ist, dass er von einem oder mehreren Heimbetreibern (3), die dazu in der Lage sind, herunterladbare Identitätsmodule bereitzustellen, Informationen, die sichere Umgebungen (7) betreffen, erhält, für die der eine oder die mehreren Heimbetreiber (3) die herunterladbaren Identitätsmodule bereitstellen, und der ferner so angeordnet ist, dass er Informationen erhält, die die Vielzahl von sicheren Umgebungen (7) betreffen, die auf der mobilen Vorrichtung (1) verfügbar sind;
eine Auswahlfunktion (17) für sichere Umgebungen, die so angeordnet ist, dass sie eine von der Vielzahl von sicheren Umgebungen (7) auswählt, die auf der mobilen Vorrichtung (1) verfügbar sind, für die mindestens einer von dem einen oder den mehreren Heimbetreibern (3) die herunterladbaren Identitätsmodule bereitstellt, wobei die Auswahlfunktion (17) für sichere Umgebungen ferner so angeordnet ist, die auf einer Basis eines Vergleichs von Informationen, die jede von der Vielzahl von sicheren Umgebungen (7) betreffen, die auf der mobilen Vorrichtung (1) verfügbar sind, mit Informationen, die die sicheren Umgebungen (7) betreffen, die von jedem von dem einen oder den mehreren Heimbetreibern (3) benötigt werden, um die herunterladbaren Identitätsmodule bereitzustellen, die eine von der Vielzahl von sicheren Umgebungen (7) auszuwählen, die auf der mobilen Vorrichtung (1) verfügbar sind;
eine Auswahlfunktion (18) für Heimbetreiber, die so angeordnet ist, dass sie einen von dem einen oder den mehreren Heimbetreibern (3) auswählt, der die herunterladbaren Identitätsmodule für die ausgewählte sichere Umgebung bereitstellt; und
eine Funktion (21) für ein Herunterladen und Bereitstellen, die so angeordnet ist, dass sie das Bereitstellen des herunterladbaren Identitätsmoduls für die mobile Vorrichtung (1) verwaltet.

9. Server (2) nach Anspruch 8, wobei der Transceiver (14) ferner so angeordnet ist, dass er eine Anfrage bezüglich einer Auswahl von der einen von der Vielzahl von sicheren Umgebungen (7), die auf der mobilen Vorrichtung (1) verfügbar sind, von der mobilen Vorrichtung (1) empfängt, wobei die Anfrage die Informationen beinhaltet, die die Vielzahl von sicheren Umgebungen (7) betreffen, die auf der mobilen Vorrichtung (1) verfügbar sind, und/oder wobei der Transceiver (14) ferner so angeordnet ist, dass er die Informationen empfängt, die die Vielzahl von sicheren Umgebungen (7) betreffen, die auf der mobilen Vorrichtung (1) verfügbar sind, wobei die Informationen Kapazitäten und/oder Merkmale für jede von der Vielzahl von sicheren Umgebungen (7), die auf der mobilen Vorrichtung (1) verfügbar sind, umfassen.

10. Server (2) nach Anspruch 8 oder 9, wobei der Transceiver (14) ferner so angeordnet ist, dass er die Informationen, die die Vielzahl von sicheren Umgebungen (7), die auf der mobilen Vorrichtung (1) verfügbar sind, betreffen, wobei die Informationen eine Kennung für jede aus der Vielzahl von sicheren Umgebungen (7), die auf der mobilen Vorrichtung (1) verfügbar sind, umfassen, und ferner wahlweise Folgendes umfassen:
eine Auflösungsdatenbank (15), die so angeordnet ist, dass sie jede der Kennungen der sicheren Umgebungen verwendet, um einen weiteren Server zu identifizieren, der Kapazitäten und/oder Merkmale der sicheren Umgebung bereitstellt, und wobei wahlweise die Auswahlfunktion (17) für sichere Umgebungen ferner so angeordnet ist, dass sie, von dem identifizierten, weiteren Server, die Kapazitäten und/oder die Merkmale der sicheren Umgebung erhält oder wobei die Auswahlfunktion (17) für sichere Umgebungen ferner so angeordnet ist, dass sie, von jedem von dem einen oder den mehreren Heimbetreibern (3), Informationen erhält, wobei die Informationen eine Kennung für jede der sicheren Umgebungen (7) umfassen, für die der eine oder die mehreren Heimbetreiber (3) die herunterladbaren Identitätsmodule bereitstellen.

11. Server (2) nach Anspruch 9 oder 10, wobei die Auswahlfunktion (17) für sichere Umgebungen ferner so angeordnet ist, dass sie, von jedem von dem einen oder den mehreren Heimbetreibern (3), Informationen erhält, wobei die Informationen Kapazitäten und/oder Merkmale umfassen, die von einem Heimbetreiber benötigt werden, um das herunterladbare Identitätsmodul bereitzustellen.

12. System zum entfernten Bereitstellen, Folgendes umfassend:
den Server (2) nach Anspruch 8; und
eine mobile Vorrichtung (1), die Folgendes umfasst:
einen Transceiver, der so angeordnet ist, dass er:
eine Anfrage bezüglich einer Auswahl der einen aus der Vielzahl von sicheren Umgebungen (7), die auf der mobilen Vorrichtung (1) verfügbar sind, an den Server (2) sendet, wobei die Anfrage Informationen beinhaltet, die jede von der Vielzahl von sicheren Umgebungen (7), die auf der mobilen Vorrichtung (1) verfügbar sind, betreffen,
eine Antwort von dem Server (2) empfängt, der die ausgewählte sichere Umgebung von der Vielzahl von sicheren Umgebungen (7) identifiziert,
er eine Anfrage an den Server (2) sendet, um die identifizierte sichere Umgebung in dem herunterladbaren Identitätsmodul bereitzustellen, und
er das herunterladbare Identitätsmodul von dem Server (2) empfängt; und
eine Umschaltfunktion (9), die so angeordnet ist, dass sie das herunterladbare Identitätsmodul in der identifizierten sicheren Umgebung bereitstellt.

13. System zum entfernten Bereitstellen nach Anspruch 12, wobei die mobile Vorrichtung (1) ferner Folgendes umfasst:
eine Erkennungsfunktion (10), die so angeordnet ist, dass sie die Vielzahl von sicheren Umgebungen (7) erkennt, die auf der mobilen Vorrichtung (1) verfügbar sind und Informationen generiert, die jede von den verfügbaren sicheren Umgebungen (7) betreffen, und wobei wahlweise die Erkennungsfunktion (10) ferner so angeordnet ist, dass sie Informationen generiert, die Kapazitäten und/oder Merkmale für jede von der Vielzahl von sicheren Umgebungen (7), die auf der mobilen Vorrichtung (1) verfügbar sind, umfassen und wobei wahlweise die Erkennungsfunktion (10) ferner so angeordnet ist, dass sie Informationen generiert, die eine Kennung für jede von der Vielzahl von sicheren Umgebungen (7), die auf der mobilen Vorrichtung (1) verfügbar sind, umfassen.

14. Von einem Computer lesbares Medium, dem ein Computerprogramm bereitgestellt ist, das ein Computerprogrammcodemittel umfasst, das dazu ausgelegt ist, alle Schritte nach einem der Ansprüche 1 bis 7 durchzuführen, wenn das Computerprogramm auf einem Computer ausgeführt wird.

## Revendications

1. Procédé pour mettre en œuvre la fourniture d'un module d'identité téléchargeable dans l'un d'une pluralité d'environnements de confiance (7) disponibles sur un dispositif mobile (1), le procédé comprenant les étapes suivantes :
pour chacun d'un ou de plusieurs opérateurs domestiques (3) capables de fournir des modules d'identité téléchargeables, la conservation, par un serveur (2), d'informations concernant les environnements de confiance (7) pour lesquels les un ou plusieurs opérateurs domestiques (3) fournissent les modules d'identité téléchargeables ;
l'obtention, par le serveur (2), d'informations concernant la pluralité d'environnements de confiance (7) disponibles sur le dispositif mobile (1) ;
la comparaison, par le serveur (2), d'informations concernant chacun de la pluralité d'environnements de confiance (7) disponibles sur le dispositif mobile (1) avec des informations concernant les environnements de confiance (7) requises par chacun des un ou plusieurs opérateurs domestiques (3) afin de fournir les modules d'identité téléchargeables ;
sur la base de la comparaison, la sélection, par le serveur (2), de l'un de la pluralité d'environnements de confiance (7) disponibles sur le dispositif mobile (1), pour lequel au moins l'un des un ou plusieurs opérateurs domestiques (3) fournit les modules d'identité téléchargeables ;
la sélection, par le serveur (2), de l'un des un ou plusieurs opérateurs domestiques (3) qui fournit les modules d'identité téléchargeables pour l'environnement de confiance sélectionné ; et
la gestion, par le serveur (2), de la fourniture du module d'identité téléchargeable sur le dispositif mobile (1) .

2. Procédé selon la revendication 1, dans lequel l'étape d'obtention des informations concernant la pluralité d'environnements de confiance (7) disponibles sur le dispositif mobile (1) comprend :
la réception, par le serveur (2), d'une demande du dispositif mobile (1) de sélection de l'un de la pluralité d'environnements de confiance (7) disponibles sur le dispositif mobile (1), la demande comportant les informations concernant la pluralité d'environnements de confiance (7) disponibles sur le dispositif mobile (1).

3. Procédé selon l'une quelconque des revendications 1 ou 2, dans lequel les informations concernant la pluralité d'environnements de confiance (7) disponibles sur le dispositif mobile (1) comprennent des capacités et/ou des fonctionnalités pour chacun de la pluralité d'environnements de confiance (7) disponibles sur le dispositif mobile (1), ou dans lequel les informations concernant la pluralité d'environnements de confiance (7) disponibles sur le dispositif mobile (1) comprennent un identifiant pour chacun de la pluralité d'environnements de confiance (7) disponibles sur le dispositif mobile (1).

4. Procédé selon la revendication 3, dans lequel si les informations concernant la pluralité d'environnements de confiance (7) disponibles sur le dispositif mobile (1) comprennent l'identifiant, l'étape d'obtention des informations concernant la pluralité d'environnements de confiance (7) disponibles sur le dispositif mobile (1) comprend :
pour chacun de la pluralité d'environnements de confiance (7) disponibles sur le dispositif mobile (1), l'utilisation de l'identifiant de l'environnement de confiance pour identifier un autre serveur qui fournit des capacités et/ou des fonctionnalités de l'environnement de confiance, et l'obtention des capacités et/ou des fonctionnalités à partir du serveur supplémentaire identifié, et éventuellement dans lequel le serveur supplémentaire identifié est un serveur d'autorité de validation de plateforme.

5. Procédé selon l'une quelconque des revendications 3 ou 4, dans lequel les informations concernant les environnements de confiance (7) pour lesquels les un ou plusieurs opérateurs domestiques (3) fournissent les modules d'identité téléchargeables comprennent :
les capacités et/ou fonctionnalités requises par les un ou plusieurs opérateurs domestiques (3) pour fournir les modules d'identité téléchargeables.

6. Procédé selon la revendication 1, comprenant en outre les étapes :
d'envoi, par le dispositif mobile (1), d'une demande au serveur (2) de sélection de l'un de la pluralité d'environnements de confiance (7) dans lequel le module d'identité téléchargeable doit être fourni, la demande comportant des informations concernant chacun de la pluralité d'environnements de confiance (7) disponibles sur le dispositif mobile (1) ;
de réception, par le dispositif mobile (1), d'une réponse du serveur (2) identifiant l'environnement de confiance sélectionné parmi la pluralité d'environnements de confiance (7) ;
d'envoi, par le dispositif mobile (1), d'une demande au serveur (2) pour fournir l'environnement de confiance identifié dans le module d'identité téléchargeable ;
de réception, par le dispositif mobile (1), du module d'identité téléchargeable du serveur (2) ; et
de fourniture, par le dispositif mobile (1), du module d'identité téléchargeable dans l'environnement de confiance identifié.

7. Procédé selon la revendication 6, dans lequel les informations concernant la pluralité d'environnements de confiance (7) disponibles sur le dispositif mobile (1) comprennent des capacités et/ou des fonctionnalités pour chacun de la pluralité d'environnements de confiance (7) disponibles sur le dispositif mobile (1), et éventuellement dans lequel les informations concernant la pluralité d'environnements de confiance (7) disponibles sur le dispositif mobile (1) comprennent un identifiant pour chacun de la pluralité d'environnements de confiance (7) disponibles sur le dispositif mobile (1), et/ou le procédé comprenant les étapes :
après la réception de la réponse du serveur (2), d'envoi, par le dispositif mobile (1), d'une demande au serveur (2) de fourniture du module d'identité téléchargeable dans l'environnement de confiance identifié.

8. Serveur (2) configuré pour mettre en œuvre la fourniture d'un module d'identité téléchargeable dans l'un d'une pluralité d'environnements de confiance (7) disponibles sur un dispositif mobile (1), le serveur (2) comprenant :
un émetteur-récepteur (14) agencé pour obtenir, à partir d'un ou de plusieurs opérateurs domestiques (3) capables de fournir des modules d'identité téléchargeables, des informations concernant les environnements de confiance (7) pour lesquels les un ou plusieurs opérateurs domestiques (3) fournissent les modules d'identité téléchargeables, et étant en outre agencé pour obtenir des informations concernant la pluralité d'environnements de confiance (7) disponibles sur le dispositif mobile (1) ;
une fonction de sélection d'environnement de confiance (17) agencée pour sélectionner l'un de la pluralité d'environnements de confiance (7) disponibles sur le dispositif mobile (1), pour lequel au moins l'un des un ou plusieurs opérateurs domestiques (3) fournit les modules d'identité téléchargeables, dans lequel la fonction de sélection d'environnement de confiance (17) est en outre agencée pour sélectionner l'un de la pluralité d'environnements de confiance (7) disponibles sur le dispositif mobile (1) sur la base d'une comparaison d'informations concernant chacun de la pluralité d'environnements de confiance (7) disponibles sur le dispositif mobile (1) avec des informations concernant les environnements de confiance (7) requises par chacun des un ou plusieurs opérateurs domestiques (3) afin de fournir les modules d'identité téléchargeables ;
une fonction de sélection d'opérateur domestique (18) agencée pour sélectionner l'un des un ou plusieurs opérateurs domestiques (3), qui fournit les modules d'identité téléchargeables pour l'environnement de confiance sélectionné ; et
une fonction de téléchargement et de fourniture (21) agencée pour gérer la fourniture du module d'identité téléchargeable sur le dispositif mobile (1).

9. Serveur (2) selon la revendication 8, dans lequel l'émetteur-récepteur (14) est en outre agencé pour recevoir une demande du dispositif mobile (1) de sélection de l'un de la pluralité d'environnements de confiance (7) disponibles sur le dispositif mobile (1), la demande comportant les informations concernant la pluralité d'environnements de confiance (7) disponibles sur le dispositif mobile (1), et/ou dans lequel l'émetteur-récepteur (14) est en outre agencé pour recevoir les informations concernant la pluralité d'environnements de confiance (7) disponibles sur le dispositif mobile (1), les informations comprenant des capacités et/ou des fonctionnalités pour chacun de la pluralité d'environnements de confiance (7) disponibles sur le dispositif mobile (1).

10. Serveur (2) selon l'une quelconque des revendications 8 ou 9, dans lequel l'émetteur-récepteur (14) est en outre agencé pour recevoir les informations concernant la pluralité d'environnements de confiance (7) disponibles sur le dispositif mobile (1), les informations comprenant un identifiant pour chacun de la pluralité d'environnements de confiance (7) disponibles sur le dispositif mobile (1) et comprenant en outre éventuellement :
une base de données de résolution (15) agencée pour utiliser chacun des identifiants d'environnement de confiance pour identifier un autre serveur qui fournit des capacités et/ou des fonctionnalités de l'environnement de confiance, et éventuellement dans lequel la fonction de sélection d'environnement de confiance (17) est en outre agencée pour obtenir, à partir du serveur supplémentaire identifié, les capacités et/ou les fonctionnalités de l'environnement de confiance, ou dans lequel la fonction de sélection d'environnement de confiance (17) est en outre agencée pour obtenir des informations, à partir de chacun des un ou plusieurs opérateurs domestiques (3), les informations comprenant un identifiant pour chacun des environnements de confiance (7) pour lesquels les un ou plusieurs opérateurs domestiques (3) fournissent les modules d'identité téléchargeables.

11. Serveur (2) selon la revendication 9 ou 10, dans lequel la fonction de sélection d'environnement de confiance (17) est en outre agencée pour obtenir des informations, à partir de chacun des un ou plusieurs opérateurs domestiques (3), les informations comprenant des capacités et/ou des fonctionnalités requises par un opérateur domestique pour fournir le module d'identité téléchargeable.

12. Système de fourniture à distance comprenant :
le serveur (2) selon la revendication 8 ; et
un dispositif mobile (1) comprenant :
un émetteur-récepteur agencé pour :
envoyer au serveur (2) une demande de sélection de l'un de la pluralité d'environnements de confiance (7) disponibles sur le dispositif mobile (1), la demande comportant des informations concernant chacun de la pluralité d'environnements de confiance (7) disponibles sur le dispositif mobile (1),
recevoir une réponse du serveur (2) identifiant l'environnement de confiance sélectionné de la pluralité d'environnements de confiance (7),
envoyer une demande au serveur (2) pour fournir l'environnement de confiance identifié dans le module d'identité téléchargeable, et
recevoir le module d'identité téléchargeable du serveur (2) ; et
une fonction de commutation (9) agencée pour fournir le module d'identité téléchargeable dans l'environnement de confiance identifié.

13. Système de fourniture à distance selon la revendication 12, dans lequel le dispositif mobile (1) comprend en outre :
une fonction de détection (10) agencée pour détecter la pluralité d'environnements de confiance (7) disponibles sur le dispositif mobile (1) et pour générer des informations concernant chacun des environnements de confiance disponibles (7), et éventuellement dans lequel la fonction de détection (10) est en outre agencée pour générer des informations comprenant des capacités et/ou des fonctionnalités de chacun de la pluralité d'environnements de confiance (7) disponibles sur le dispositif mobile (1), et éventuellement dans lequel la fonction de détection (10) est en outre agencée pour générer des informations comprenant un identifiant pour chacun de la pluralité d'environnements de confiance (7) disponibles sur le dispositif mobile (1).

14. Support lisible par ordinateur doté d'un programme informatique comprenant des moyens de code de programme informatique conçus pour exécuter toutes les étapes selon l'une quelconque des revendications 1 à 7 lorsque ledit programme informatique est exécuté sur un ordinateur.
